Europäisches Patentamt

European Patent Office

Office européen des brevets

(11) Veröffentlichungsnummer: **0 465 684 A1**

## (12) EUROPÄISCHE PATENTANMELDUNG

(21) Anmeldenummer: **90112839.7**

(22) Anmeldetag: **05.07.90**

(51) Int. Cl.5: **E04B 9/18**, F16L 3/24

(43) Veröffentlichungstag der Anmeldung:
**15.01.92 Patentblatt 92/03**

(84) Benannte Vertragsstaaten:
**AT BE CH DE DK ES FR GB GR IT LI LU NL SE**

(71) Anmelder: **ERICO GMBH**

**W-6791 Schwanenmühle
Steinalben/Pfalz(DE)**

(72) Erfinder: **Lang, Günter
Im Wiesengrund 11
W-4355 Waltrop(DE)**

(74) Vertreter: **Türk, Gille, Hrabal
Brucknerstrasse 20
W-4000 Düsseldorf 13(DE)**

(54) **Vorrichtung zum Befestigen von Abhängeelementen od.dgl. an Profilträgern.**

(57) Es ist eine Vorrichtung zum Befestigen von Abhängeelementen od.dgl. an Profilträgern wie I-Trägern (1) offenbart, die wenigstens einen Halter (4; 17; 25) aus einem Zuschnitt (5) aus federndem Material aufweist, der an beiden Enden mit einem ausgebogenen hakenförmigen Ansatz (7, 8; 22; 28) versehen ist und im mittleren Bereich (6; 18; 26) eine Öffnung (9; 19; 27) zum Durchstecken eines stangen- oder stabförmigen profilierten Abhängeelementes (2; 24) enthält.

FIG. 1

EP 0 465 684 A1

Die Erfindung betrifft eine Vorrichtung zum Befestigen von Abhängeelementen od.dgl. an Profilträgern wie I-Trägern.

In Gebäuden ist es häufig erforderlich, von Decken Teile abzuhängen, wobei es sich sowohl um Zwischendecken bzw. Verblender als auch um Rohrleitungen, elektrische Kabel und dergleichen handeln kann. Weist die Deckenkonstrution bzw. die Konstruktion unter der etwas abgehängt werden soll, Profilträger wie I-Träger auf, ist es zweckmäßig, die Abhängeelemente am freiliegenden Untergurt der Profilträger zu befestigen. Hierzu ist es beispielsweise erforderlich, im Profilträger Öffnungen anzubringen, um die Abhängeelemente zu befestigen. Dies ist aber umständlich und kostspielig.

Andererseits kann man Abhängeelemente auch mit Klammern oder Klemmen an einem Profilträger bzw. dem Untergurt eines I-Trägers anbringen, jedoch sind derartige Klammern oder Klemmen kostspielig und müssen an die Breite des Untergurtes des I-Trägers angepaßt werden, so daß sie nicht für Profilträger verschiedener Größen geeignet sind.

Der Erfindung liegt die Aufgabe zugrunde, eine Vorrichtung zum Befestigen von Abhängeelementen an Profilträgern zu schaffen, die einfach ausgebildet, preiswert herzustellen und leicht zu montieren ist und die an Profilträgern wie I-Trägern unterschiedlichster Größen bzw. Querschnittsformen schnell und dauerhaft angebracht werden kann.

Diese Aufgabe wird erfindungsgemäß mit einer Vorrichtung der eingangs genannten Gattung gelöst, welche die Merkmale des Patentanspruches 1 aufweist. Vorteilhafte Ausgestaltungen der Erfindung sind Gegenstand der Unteransprüche.

Die erfindungsgemäße Vorrichtung weist zumindest einen Halter auf, der aus einem Zuschnitt aus federndem Blech gebildet ist und an beiden Seiten jeweils einen hakenförmigen Ansatz aufweist. Dieser Halter oder Zuschnitt enthält im mittleren Bereich eine Öffnung zum Durchstecken eines stangen- oder stabförmigen Abhängeelementes, wobei diese Öffnung mit einer Art Widerhaken versehen ist, die sich gegen die Außenseite des Abhängeelementes legen und eine Verschiebung des Halters oder Zuschnittes auf dem Abhängeelement nur in einer Richtung zuläßt, in der entgegengesetzten Richtung hingegen hemmt oder ganz verhindert. Somit kann man die Halter oder Zuschnitte auf das Abhängeelement in einer Richtung aufstecken und aufschieben, bis sie sich mit ihrem oberen hakenförmigen Ansatz auf die Oberseite des Untergurtes eines I-Trägers legen. Der andere hakenförmige Ansatz jedes Halters oder Zuschnittes stützt das eingesteckte stangen- oder rohrförmige Abhängeelement ab.

Die Halter oder Zuschnitte der erfindungsgemäßen Vorrichtung werden sozusagen locker auf den Untergurt des betreffenden Profilträgers aufgeschoben. Da sich die Halter oder Zuschnitte nicht in entgegengesetzter Richtung auf dem eingesteckten Abhängeelement verschieben können, ist ein ungewolltes Lösen der Vorrichtung vom Profilträger nicht möglich. Drückt man die Halter oder Zuschnitte fest gegen die Seitenkanten des Untergurtes des entsprechenden Profilträgers, so ist durch Reibschluß auch ein Verschieben der montierten Vorrichtung in Längsrichtung des Profilträgers verhindert.

Durch die Erfindung wird eine aus einfachen Teilen bestehende, jedoch sehr wirksame, leicht und dauerhaft zu montierende Vorrichtung zum Anbringen von Abhängeelementen od.dgl. an Profilträgern wie I-Trägern geschaffen, die keine Veränderungen an den Profilträgern erfordert und für Profilträger unterschiedlicher Größen bzw. Querschnitte in gleicher Weise geeignet ist. Die Montage dieser Vorrichtung ist denkbar einfach und setzt keine Fachkenntnisse voraus, ebensowenig wie Spezialwerkzeuge notwendig sind. Allenfalls wird ein Hammer benötigt, um die Halter oder Zuschnitte auf den betreffenden stangen-, stab- oder rohrförmigen Abhängeelementen in die endgültige Montageposition zu verschieben.

Die Grundelemente der erfindungsgemäßen Vorrichtung sind Formstücke aus federndem Werkstoff, welche ausgestellte Zungen oder Krallen als Rutschsicherung aufweisen, die sich auf die Oberflächen von als Abhängeelemente dienenden Profilstäben legen. Die Abhängeelemente können um die Quer- oder Hochachse geführte Flachprofile oder auch Rohr- und Rundprofile sein. Ausnehmungen im Hakenteil der Halter, die sich sozusagen zwischen kleinen Federzungen befinden, umfassen formschlüssig die stabförmigen Abhängeelemente.

Die Ausnehmungen der Halter gestatten ein axiales Aufschieben des Halters auf ein stabförmiges Abhängeelement in einer Richtung, während die ausgestellten Zungen oder Krallen die Bewegung in Gegenrichtung sperren. Die Federzungen des unteren Hakenteiles ermöglichen, die Klemmdicke zu variieren.

Der in einem Winkel von etwa 15 bis etwa 45 Grad abgebogene und hochgestellte Hakenteil jedes Halters dient als Gegenlager und Führungsstück, das eine Kippsicherung bildet. Der Winkel der Aufbiegung dieses Hakenteils bestimmt außerdem das Klemmverhalten und die Elastizität des Halters.

In der Zeichnung sind Ausführungsbeispiele der erfindungsgemäßen Vorrichtung schematisch dargestellt, und zwar zeigt

Fig. 1    eine schaubildliche Ansicht einer ersten Ausführungsform der erfindungsgemäßen Vorrichtung, die am Untergurt eines I-Trägers montiert ist, wobei ein Teil des Untergurtes weggebrochen ist, um die erfindungsgemäße
Vorrichtung besser erkennen zu lassen,

Fig. 2    eine schaubildliche Ansicht ähnlich
wie in Fig. 1 einer zweiten Ausführungsform der erfindungsgemäßen
Vorrichtung,

Fig. 3    eine schaubildliche Ansicht ähnlich
wie in Fig. 1 und 2 einer dritten Ausführungsform der erfindungsgemäßen
Vorrichtung,

Fig. 4    eine schaubildliche Ansicht ähnlich
wie in den vorhergehenden Figuren
einer vierten Ausführungsform der erfindungsgemäßen Vorrichtung,

Fig. 5    eine Seitenansicht der vierten Ausführungsform in gegenüber Fig. 4 verkleinertem Maßstab,

Fig. 6    eine Seitenansicht eines aus einem
Blechzuschnitt geformten hakenförmigen Halters der Vorrichtung gemäß
dem Ausführungsbeispiel aus Fig. 1 in
gegenüber Fig. 1 vergrößerten Maßstab,

Fig. 7    eine Ansicht des Halters aus Fig. 6 in
Richtung des Pfeiles X und

Fig. 8    einen Schnitt des Halters aus Fig. 6
und 7 nach Linie A-A aus Fig. 7.

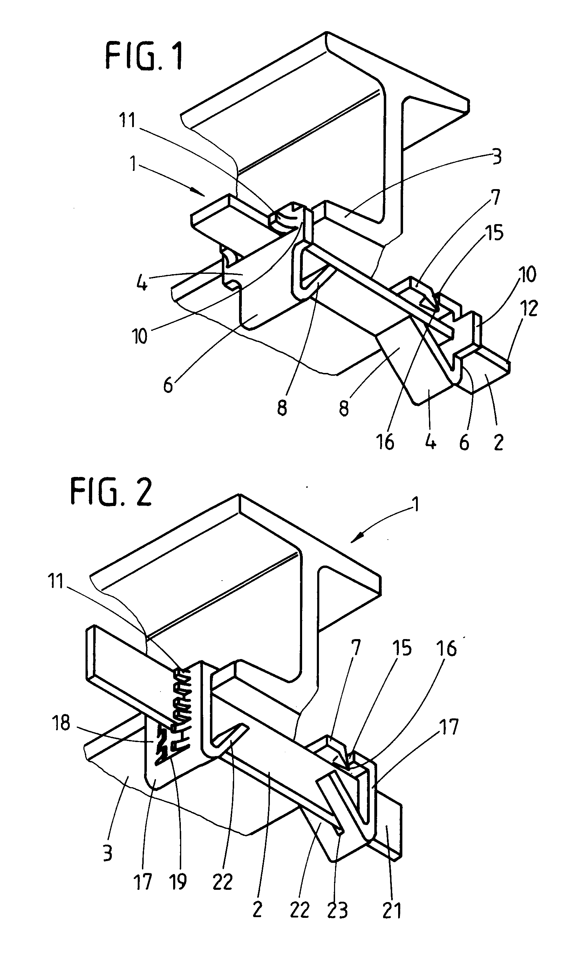

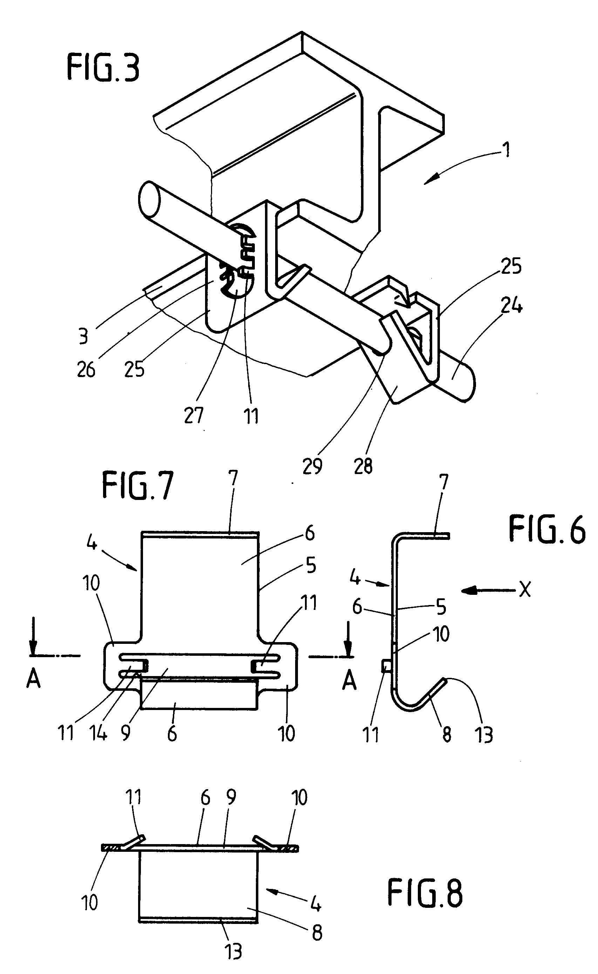

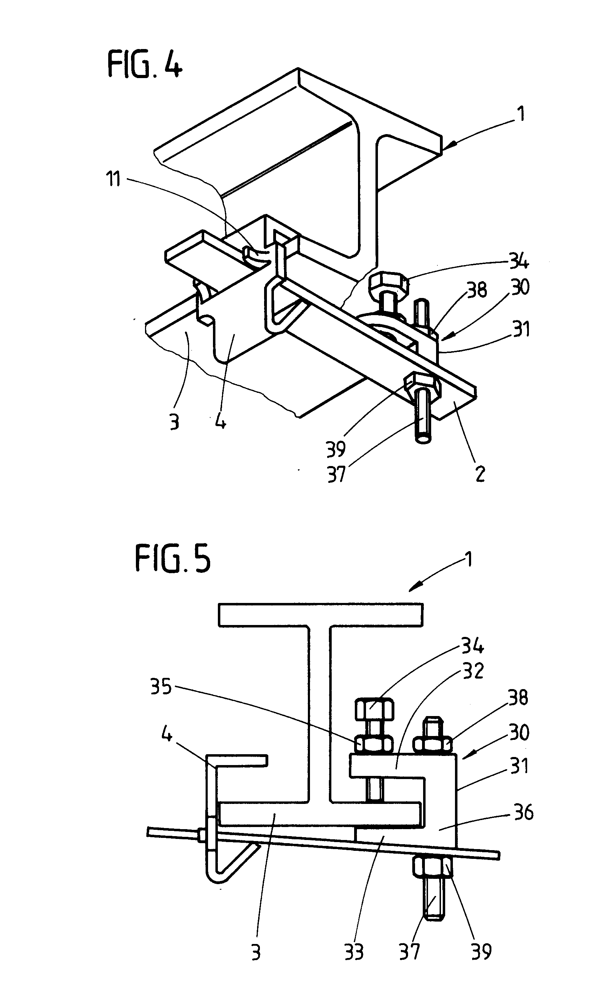

Bei der Ausführungsform gemäß Fig. 1 ist an
einem I-Träger 1 ein Flachstab 2 in horizontaler
Anordnung angebracht, der ein Abhängeelement
für eine hier nicht näher gezeigte Abhängekonstruktion bildet. Dieser Flachstab 2 ist unter dem
Untergurt 3 des I-Trägers 1 etwa parallel zu diesem Untergurt angeordnet und am Untergurt 3
mittels zwei auf ihn aufgesteckten und aufgeschobenen Haltern 4 befestigt, die jeweils aus einem
Zuschnitt beispielsweise aus Blech und insbesondere federndem Blech gebildet und in Fig. 6 bis 8
im einzelnen gezeigt und anhand dieser Figuren
erläutert sind.

Der den jeweiligen Halter 4 bildende Zuschnitt
kann aus federndem Blech bestehen, aber ebenso
aus entsprechendem Kunststoff geformt sein.

Jeder Halter 4 ist aus einem blechförmigen
oder plattenförmigen Zuschnitt 5 gebildet, der einen ebenen mittleren streifenförmigen Abschnitt 6
aufweist, dessen Enden hakenförmig abgebogen
sind. Am oberen Ende des streifenförmigen Abschnittes 6 ist ein rechtwinklig abgebogener Endabschnitt 7 vorgesehen, während sich am entgegengesetzten bzw. unteren Ende des Abschnittes 6
ein um etwa 45 Grad zurückgebogener Hakenabschnitt 8 befindet.

Der streifenförmige Abschnitt 6 enthält eine
flache rechteckige Öffnung 9, die sich beim Ausführungsbeispiel gemäß Fig. 1 und 6 bis 8 in einem Bereich befindet, in welchem der streifenförmige Abschnitt 6 seitliche Ausbuchtungen 10 aufweist.

Die Öffnung 9 ist so ausgebildet, daß von deren Stirnenden in dieselbe Krallen oder Zungen 11
hineinragen, die, wie insbesondere Fig. 8 zeigt, in
einem Winkel von etwa 30 Grad aus der Ebene
des streifenförmigen Abschnittes 6 in entgegengesetzter Richtung wie der abgewinkelte Endabschnitt
7 und der in dieselbe Richtung abgewinkelte Hakenabschnitt 8 vorstehen.

Fig. 1 zeigt, daß die Krallen oder Zungen 11
sich federnd und damit sozusagen widerhakenartig
gegen die Seitenkanten 12 des Flachstabes 2 legen, auf den die Halter 4 aufgesteckt und aufgeschoben sind. Weil die Zungen 11 sich nach außen
erstrecken und damit von Untergurt 3 des I-Trägers
1 wegweisen, verhindern dieselben, daß ein auf
den Flachstab 2 aufgesteckter und aufgeschobener
Halter in der entgegengesetzten Richtung von den
Flachstab abgeschoben oder gelöst werden kann.
Vielmehr ist sichergestellt, daß die Halter 4 in der
einmal aufgeschobenen und in die den Untergurt 3
des I-Trägers 1 übergreifenden Montageposition
gebrachten Halter nicht mehr zurückbewegt werden
können.

Die freie, obere Kante 13 des Hakenabschnittes 8 befindet sich etwa in der Höhe der unteren
Kante 14 der Öffnung 9, so daß der Hakenabschnitt
8 den Flachstab 2 abstützen kann, auf den die
Halter 4 aufgesteckt sind, um den Flachstab 2 am
I-Träger 1 anzubringen.

Bei dieser Vorrichtung ist es nicht erforderlich,
daß der Flachstab 2 an der Unterseite des Untergurtes 3 des I-Trägers 1 anliegt. Da die am Flachstab 2 angebrachten Lasten, vorzugsweise leichte
Lasten, hängen, genügt es, wenn gewährleistet ist,
daß die Halter 4 mit ihren etwa rechtwinklig abgebogenen Endabschnitten 7 auf der Oberseite des
Untergurtes 3 eines I-Trägers dauerhaft und unverrückbar aufliegen, um die angehängte Last sicher
zu halten. Zusätzlich kann ein Verschieben der
Vorrichtung in Längsrichtung des I-Trägers 1 beispielsweise dadurch verhindert werden, daß man
die beiden für die Anhängung vorgesehenen Halter
4 von entgegengesetzten Seiten gegen den Untergurt 3 des I-Trägers 1 unter einem gewissen Druck
anstellt, so daß ein Verschieben in Längsrichtung
des Untergurtes 3 durch Reibschluß verhindert
wird.

Obwohl es vorteilhaft und zweckmäßig ist, die
Halter der Vorrichtung sowie den als Abhängeelement verwendeten Flachstab aus Metall und dabei
zweckmäßig aus mehr oder weniger federndem
Stahl herzustellen, können diese Teile auch aus
entsprechende Eigenschaften aufweisendem Kunststoff bestehen.

Aus Fig. 1 ist erkennbar, daß der rechtwinklig abgewinkelte Endabschnitt 7 des Halters 4 an wenigstens einer Seite eine Einkerbung 15 enthält, die eine Art Widerhaken 16 bildet, der als Abrutschsicherung wirkt, wenn der Endabschnitt 7 auf dem Untergurt 3 des I-Trägers 1 aufliegt.

Bei der in Fig. 2 dargestellten Vorrichtung ist der als Abhängeelement vorgesehene Flachstab 2 hochkant angeordnet. Die den Flachstab 2 an Untergurt 3 des I-Trägers 1 befestigenden Halter 17 enthalten dementsprechend in mittleren Bereich eine sich in Längsrichtung des streifenförmigen Abschnittes 18 erstreckende längliche Öffnung 19, an deren Längsseiten jeweils mehrere Krallen oder Zungen 20 vorgesehen sind, die in den Bereich der Öffnung 19 hineinragen und sich auf die Oberflächen 21 des Flachstabes 2 legen. Daher ist der Reibkontakt zwischen Flachstab und Halter größer als bei der Ausführungsform gemäß Fig. 1, so daß sich eine noch bessere Sicherung gegen unerwünschtes Lockern ergibt.

Der untere, schräg nach oben geführte Hakenabschnitt 22 jedes Halters 17 enthält einen Längsschlitz 23, der zur Aufnahme des Flachstabes 2 dient und somit eine zusätzliche seitliche Führung bildet.

Im übrigen sind die Halter 17 in ihrer Funktion mit den Haltern 4 der Ausführungsform gemäß Fig. 1 vergleichbar.

Bei der Ausführungsform gemäß Fig. 3 ist das Abhängeelement ein Rohr oder Rundstab 24, der ebenfalls an Untergurt 3 eines I-Trägers 1 angebracht ist. Die zu diesem Zweck vorgesehenen beiden Halter 25 enthalten im streifenförmigen mittleren Abschnitt 26 eine der Querschnittsform des Rundstabes 24 angepaßte runde bis abgerundete Öffnung 27, von deren Längsseiten mehrere Krallen oder Zungen 11 in die Öffnung 27 hineinragen, um sich auf die Oberfläche des Rundstabes 24 zu legen, auf den der betreffende Halter 25 aufgesteckt ist. Auch bei dieser Ausführungsform kommen auf jeder Seite der Öffnung 27 mehrere Krallen oder Zungen 11 mit der Oberfläche des Rundstabes 24 in Kontakt, um den Reibungsschluß zwischen Halter und Rundstab zu erhöhen.

Der schräg nach oben verlaufende hochgebogene Hakenabschnitt 28 jedes Halters 25 enthält eine der Querschnittsform des Rundstabes 24 angepaßte Ausnehmung 29, um den Rundstab 24 aufnehmen und dabei sowohl von unten als auch seitlich abstützen zu können, wie Fig. 3 zeigt.

Bei der in Fig. 4 und 5 gezeigten Ausführungsform ist ein in flacher oder horizontaler Position vorgesehener Flachstab 2 mittels einer Klemme 30 an einer Seite des Untergurtes 3 eines I-Trägers 1 befestigt, während im Bereich der anderen Seite des Untergurtes 3 ein Halter 4 der in Verbindung mit Fig. 1 und 6 bis 8 erläuterten Art vorgesehen ist. Fig. 5 zeigt dabei, daß der Halter 4 lediglich an der Längskante des Untergurtes 3 des I-Trägers 1 anliegt.

Die Klemme 30 weist einen in Seitenansicht U-förmigen Gabelkörper 31 auf, dessen beide parallele Schenkel 32 und 33 den Untergurt 3 des I-Trägers 1 beidseits übergreifen und somit zwischen sich aufnehmen. In den Schenkel 32 ist eine Spannschraube 34 eingeschraubt, die gegen den Untergurt 3 des I-Trägers 1 angezogen werden kann und dabei den anderen Schenkel 33 gegen die entgegengesetzte Seite des Untergurtes 3 zieht und dadurch festspannt. Eine Kontermutter 35 ist zur Sicherung der Spannposition der Spannschraube 34 auf diese oberhalb des Schenkels 32 aufgeschraubt.

Der die Schenkel 32 und 33 verbindende Bügelabschnitt 36 des Gabelkörpers 31 enthält in Längsrichtung eine durchgehende Bohrung, durch welche ein Schraubenbolzen 37 gesteckt ist, der auch durch eine Öffnung in Flachstab 2 ragt und auf dessen beide Enden Muttern 38 und 39 aufgeschraubt sind. Sind die Muttern 38 und 39 angezogen, ist der Flachstab 2 formschlüssig mit der Klemme 30 verbunden.

## Patentansprüche

1. Vorrichtung zum Befestigen von Abhängeelementen od.dgl. an Profilträgern wie I-Trägern, **dadurch gekennzeichnet,** daß sie wenigstens einen Halter (4; 17; 25) aus einem Zuschnitt (5) aus federndem Material aufweist, der an beiden Enden mit einem ausgebogenen hakenförmigen Ansatz (7, 8; 22; 28) versehen ist und im mittleren Bereich (6; 18; 26) eine Öffnung (9; 19; 27) zum Durchstecken eines stangen- oder stabförmigen profilierten Abhängeelementes (2; 24) enthält.

2. Vorrichtung nach Anspruch 1, dadurch gekennzeichnet, daß im Bereich der Öffnung (9; 19; 27) in diese hineinragende Krallen oder Zungen (11; 20) vorgesehen sind, die sich widerhakenartig auf die Abhängeelemente (2; 24) auf welche die Halter (4; 17; 25) aufgesteckt sind, legen.

3. Vorrichtung nach Anspruch 1 oder 2, dadurch gekennzeichnet, daß die Krallen oder Zungen (11; 20) in entgegengesetzter Richtung zu den hakenförmigen Ansätzen (7, 8; 22; 28) aus der Ebene (6; 18; 26) des Halters (4; 17; 25) herausgebogen sind.

4. Vorrichtung nach einen der Ansprüche 1 bis 3, dadurch gekennzeichnet, daß der eine hakenförmige Ansatz (7) sich etwa rechtwinklig zur Ebene (6; 18; 26) des Halters (4; 17; 25) und der andere hakenförmige Ansatz (8; 22; 28) sich unter einen spitzen Winkel zur Ebene (6; 18; 26) des Halters (4; 17; 25) erstreckt.

5. Vorrichtung nach einen der Ansprüche 1 bis 4, dadurch gekennzeichnet, daß der sich in einem spitzen Winkel zur Ebene (18; 26) des Halters (17; 25) erstreckende hakenförmige Ansatz (22; 28) eine Ausnehmung (23; 29) zur Aufnahme des Abhängeelementes (2; 24) auf das der Halter (4; 17; 25) aufgesteckt ist, enthält.

FIG. 1

FIG. 2

FIG.3

1

3

26  25

27  11

29  28

25

24

FIG.7

7

4

10

6

5

11

A

11  14  9  6

10

FIG.6

7

4

6

10

5

10

X

A

11  8  13

FIG.8

11  6  9  10

10

10

4

8

13

# FIG.4

# FIG.5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X,A | DE-U-8 605 411   (OBO BETTERMANN)<br>* Seite 16, Absatz 4 - Seite 18, Absatz 1; Figuren 1, 3, 8, 9 *<br>– – – | 1,2,3,4,5 | E 04 B 9/18<br>F 16 L 3/24 |
| A | US-A-1 575 268   (F. HOWARD)<br>* das ganze Dokument *<br>– – – | 1 | |
| A | US-A-2 877 974   (T. ESTES)<br>* Spalte 2, Zeilen 15 - 66; Figuren 1-5 *<br>– – – | 1 | |
| A | EP-A-0 030 420   (H. LINDSAY)<br>* Figur 5 *<br>– – – | 1 | |
| A | DE-A-3 014 697   (SIEMENS)<br>* Figur *<br>– – – – – | 4 | |

**RECHERCHIERTE SACHGEBIETE (Int. Cl.5)**

E 04 B
F 16 L
E 04 D
H 02 G

**Der vorliegende Recherchenbericht wurde für alle Patentansprüche erstellt**

| Recherchenort | Abschlußdatum der Recherche | Prüfer |
|---|---|---|
| Den Haag | 18 Februar 91 | KRIEKOUKIS S. |